(19) Europäisches Patentamt / European Patent Office / Office européen des brevets

(11) **EP 2 609 313 B1**

(12) **FASCICULE DE BREVET EUROPEEN**

(45) Date de publication et mention
de la délivrance du brevet:
**04.10.2017 Bulletin 2017/40**

(21) Numéro de dépôt: **11761655.7**

(22) Date de dépôt: **23.08.2011**

(51) Int Cl.:
**F02C 7/32** *(2006.01)* **F02C 9/28** *(2006.01)*

(86) Numéro de dépôt international:
**PCT/FR2011/051945**

(87) Numéro de publication internationale:
**WO 2012/025689 (01.03.2012 Gazette 2012/09)**

(54) **PROCÉDÉ D'OPTIMISATION DE RÉGULATION D'UN GROUPE DE PUISSANCE À TURBINE LIBRE POUR AÉRONEF ET COMMANDE DE RÉGULATION DE MISE EN OEUVRE**

VERFAHREN ZUR OPTIMIERTEN STEUERUNG EINES FREIEN TURBINENTRIEBWERK FÜR EIN FLUGZEUG UND STEUERUNG ZUR DURCHFÜHRUNG DES VERFAHRENS

METHOD FOR OPTIMIZING THE CONTROL OF A FREE TURBINE POWERPLANT FOR AN AIRCRAFT, AND CONTROLLER FOR IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2010 FR 1056774**

(43) Date de publication de la demande:
**03.07.2013 Bulletin 2013/27**

(73) Titulaire: **Safran Helicopter Engines**
**64510 Bordes (FR)**

(72) Inventeur: **HAILLOT, Jean-Michel**
**F-64800 Beuste (FR)**

(74) Mandataire: **Gevers & Orès**
**9 rue St Antoine du T**
**31000 Toulouse (FR)**

(56) Documents cités:
**FR-A1- 2 178 151** **US-A- 4 185 203**
**US-A- 4 488 236** **US-A- 4 928 482**
**US-A1- 2003 126 864**

**Description**

**DOMAINE TECHNIQUE**

L'invention concerne un procédé d'optimisation de régulation d'un groupe de puissance à turbine libre apte à délivrer de la puissance sur un aéronef, ainsi qu'une commande de régulation mise en oeuvre de ce procédé.

L'invention s'applique aux groupes de puissance à turbine libre équipant les aéronefs, par exemple les avions et les hélicoptères, aptes à fournir de la puissance. Ces groupes peuvent fournir notamment de la puissance aux équipements (alternateurs, pompes, compresseurs de charge, conditionnement d'air) de l'aéronef, directement et/ou indirectement via des boîtes de transfert de puissance à réducteurs à sorties multiples.

Ces groupes de puissance comportent les groupes auxiliaires de puissance, en abrégé GAP (ou APU pour « Auxiliary Power Unit » en terminologie anglaise) et les groupes de puissance principaux, en abrégé GPP. Les GAP sont dédiés au démarrage des moteurs principaux des aéronefs et/ou à la fourniture d'énergie non propulsive (pneumatique, électrique et/ou hydraulique) au sol. Certains groupes GAP sécurisés peuvent également intervenir en vol en cas de panne d'un moteur pour tenter de le redémarrer et/ou pour fournir de l'énergie aux équipements.

Les groupes GPP sont de classe moteur car ils répondent aux normes de sécurité des moteurs principaux, en particulier en cas de défaillance d'un moteur. Un tel groupe a pour base un groupe GAP fiabilisé par ses matériaux et ses dimensions pour obtenir la labellisation de classe moteur.

Un groupe de puissance comporte classiquement un ensemble compresseurs/chambres de combustion/turbines formant un générateur de gaz. Après le mélange air / carburant et la combustion, les gaz chauds sont détendus dans les étages de la turbine haute pression (HP en abrégé) qui transmet partiellement la puissance thermique produite aux étages du compresseur HP via un arbre haut pression ou corps HP. La puissance thermique des gaz d'échappement entraîne également une turbine libre (en abrégé TL) qui, à son tour, transmet mécaniquement de la puissance via un arbre basse pression BP, aux équipements (alternateurs, pompes, compresseur de charge, etc.) du générateur de puissance.

**ETAT DE LA TECHNIQUE**

Classiquement, un système de régulation fournit et dose la quantité de carburant injectée dans la chambre de combustion du générateur de gaz pour l'adapter au niveau de puissance demandé. La vitesse du corps HP s'adapte à cette injection après accélération ou décélération pour atteindre un niveau constant de vitesse et fournir une puissance thermique au corps BP. La puissance transmise au corps BP fournit alors la puissance demandée à la vitesse constante demandée par le boîtier électronique de contrôle (BEC).

La régulation d'injection de carburant dans un groupe de puissance comporte de manière connue les étapes suivantes :

- pressuriser le carburant pour l'injecter dans la chambre de combustion à la pression appropriée,

- doser le débit du carburant dans des limites de débit prédéterminées pour adapter le niveau de puissance fourni par le générateur de gaz au niveau demandé,

- mesurer et contrôler la vitesse du rotor du corps HP pour qu'elle reste dans les limites de fonctionnement prédéterminées,

- mesurer et contrôler la vitesse du rotor du corps BP, et

- déterminer la valeur de consigne de vitesse du corps HP en fonction de l'écart entre la valeur de consigne de vitesse du corps BP et sa vitesse mesurée, ainsi que la valeur de consigne du débit du carburant à injecter dans la chambre de combustion en fonction de l'écart entre la valeur de consigne de vitesse du corps HP déterminée et sa valeur précédemment mesurée.

La vitesse de rotation de chaque équipement est alors imposée par le choix préalable de sa vitesse proche de sa vitesse maximale autorisée, là où sa capacité de fourniture de puissance est maximale. Dans ces conditions, la masse et le coût de chaque équipement sont minimisés pour un fonctionnement permanent à cette vitesse. De plus, certains équipements comme le compresseur de charge doivent pouvoir délivrer un débit corrigé variable, faible au sol et important en vol. Le débit est exprimé en valeurs corrigées pour permettre de comparer des débits indépendamment des conditions ambiantes d'entrée d'air. Pour un fonctionnement dans tout le domaine de vol, il est alors prévu une géométrie variable du flux d'air sur le compresseur de charge.

L'optimisation de telles configurations de régulation d'injection de carburant est réalisée par le maintien des vitesses des équipements entraînés à des vitesses proche des vitesses maximales par le corps BP pour fournir les puissances demandées. En particulier, aucune variation de la vitesse d'entraînement du compresseur de charge n'est utilisée. Et le seul choix d'une géométrie variable du flux d'air impose alors une définition encombrante et onéreuse du compresseur de charge.

Le choix préalable de la vitesse de la turbine TL est donc guidé uniquement par l'obtention de la fourniture de la puissance maximale, sans optimisation de rendement lors de la fourniture de niveaux de puissance variés.

Dans ces conditions, lors des transitoires de puissance, le système de régulation du groupe de puissance ne réagit que lorsqu'une sous-vitesse du corps BP inférieure à la vitesse de consigne du corps BP est détectée. Les excursions de vitesse sur le corps BP dans les transitoires de puissance sont alors importantes du fait des temps de réponse élevés des boucles de régulation et de la faible inertie de l'arbre BP par rapport à un générateur de gaz à turbine liée. De fortes variations de vitesse en dehors des plages autorisées sont constatées, en particulier des excursions au-delà des vitesses maximales en cas de délestage brutal de la puissance, ou en-deçà des vitesses minimales en cas de forte demande de puissance.

Ainsi, en cas de survitesse, les équipements entraînés ensemble ne sont plus capables de fournir la puissance demandée pour chacun d'entre eux. En cas de survitesse, un moyen de contrôle arrête instantanément le groupe de puissance du fait de sa certification, et donc l'ensemble des fournitures de puissance n'est plus assuré.

Quelques exemples de l'art antérieur sont connus de FR 2 178 151 A1 et US 2003/126864 A1.

## EXPOSE DE L'INVENTION

L'invention vise précisément à optimiser la régulation d'injection de carburant afin d'éviter les problèmes évoqués ci-dessus. Pour ce faire, les vitesses d'entraînement des équipements sont adaptées par une régulation de la vitesse de la turbine TL en fonction de la puissance.

Plus précisément, l'invention a pour objet un procédé d'optimisation de régulation d'un groupe de puissance à turbine libre, du type décrit ci-dessus ayant les étapes du procédé selon la revendication 1, et apte à délivrer de la puissance aux équipements d'un aéronef. Dans ce procédé, la vitesse du corps BP varie pour obtenir une vitesse du corps HP minimale de sorte que la puissance fournie par les équipements reste constante.

Selon un mode de réalisation préféré, les puissances fournies par les équipements étant fonction de leur vitesse d'entraînement par le corps BP, la consigne de vitesse du corps BP de la turbine TL est fonction de la valeur maximale des vitesses minimales des équipements permettant d'obtenir de manière optimisée les puissances respectivement demandées et d'une incrémentation positive ou nulle ajoutée à la consigne de vitesse du corps BP pour minimiser la vitesse du corps HP à iso-fourniture de puissance des équipements.

Selon un mode particulier, une mesure de puissance fournie en continu par chacun des équipements permet de détecter un fonctionnement stabilisé des demandes de fourniture de puissance et dans ce cas d'activer l'incrémentation.

Selon des modes avantageux, l'incrémentation est déterminée par calcul à partir des courbes de rendement des équipements et de la turbine libre ou par la détection de la variation de la vitesse du corps HP, l'incrémentation étant alors appliquée jusqu'à ce que la vitesse du corps HP soit minimale.

En particulier pour une incrémentation déterminée par le calcul, pour chaque équipement, un niveau de puissance thermique du corps HP transmise au corps BP et pour chaque condition ambiante de température et de pression à l'entrée du groupe de puissance, il existe une vitesse de rotation du corps BP qui permet de délivrer sur son arbre une puissance mécanique maximale.

Avantageusement, la puissance fournie à chaque équipement étant maintenue dans les limites d'une plage déterminée par le constructeur, la vitesse d'entraînement direct ou indirect de cet équipement par la turbine BP détermine une capacité de puissance pouvant être fournie dans ces limites. La fourniture d'une telle puissance en fonction de cette capacité permet ainsi de n'utiliser qu'une puissance partielle qui évite tout gaspillage et qui est définie entre le besoin de puissance demandé et le niveau de puissance fourni. Pour chaque équipement, le niveau de puissance fourni est donc fonction de sa vitesse d'entrainement et la fourniture d'une puissance demandée est optimisée en fonction de sa vitesse d'entrainement.

En outre, la détermination de la vitesse de consigne de la turbine BP permet d'augmenter au maximum la vitesse des équipements afin de :

- faire fonctionner les équipements au maximum de leurs capacités dans tout le domaine de vol,
- augmenter le rendement global de la turbine BP et des équipements, afin de réduire la consommation en carburant,
- limiter le bruit généré par des équipements en variant leur vitesse dans les plages définies, en particulier au sol.

De plus, en fonctionnement en vol, le compresseur de charge dispose alors d'un degré de liberté supplémentaire par la variation de vitesse de rotation. Une réduction de son encombrement peut ainsi être réalisée à iso-performance.

Le débit d'air corrigé en vol est dimensionnant pour le compresseur de charge. Il pourra s'opérer à la vitesse maximum. Par conséquence au sol, le débit d'air corrigé demandé étant plus faible, la vitesse d'entrainement est réduite. Par ailleurs, la variation de rendement d'une turbine TL amène à augmenter sa vitesse en vol par rapport au sol. La combinaison de ces deux facteurs produit un gain de consommation.

En outre, un rendement ainsi qu'un niveau sonore optimum peuvent être obtenus pour chaque équipement en fonction de sa vitesse d'entraînement qui se déduit de la puissance fournie à chaque équipement selon le procédé ci-dessus. En particulier, la diminution de vitesse réduit le niveau sonore émis par le compresseur de charge et par le générateur de gaz, ce qui permet de respecter les critères des nuisances sonores au sol et en approche.

Selon des modes de mise en oeuvre avantageux, la consigne de vitesse de rotation du corps BP est régulée pour prioritairement à chaque instant :

- adapter la vitesse de rotation du corps BP à la fourniture de la puissance demandée par chacun des équipements ;

- adapter la vitesse de rotation du corps BP au rendement global maximal par minimisation de la puissance à fournir par le corps HP selon la puissance demandée ;

- adapter la vitesse de rotation du corps BP à des conditions particulières d'utilisation, en particulier pour minimiser le niveau sonore.

Selon un mode de mise en oeuvre préféré, le procédé prévoit une étape supplémentaire d'anticipation dans laquelle une consigne de vitesse du corps HP du groupe de puissance est régulée en fonction de la variation de la puissance demandée et/ou de la puissance mesurée. Avantageusement, cette fonction « anticipation » va au devant de la réaction normale d'une régulation du régime moteur. Elle permet d'anticiper la variation de vitesse de rotation du corps HP appliquée pour passer d'une demande de puissance antérieure associée à la vitesse antérieure du corps HP à une nouvelle demande de puissance associée à la vitesse du corps HP à obtenir en condition stabilisée. L'information de variation de puissance demandée connue au plus tôt permet alors d'anticiper au mieux la réaction que devra fournir le corps HP.

La connaissance instantanée de la puissance demandée qui permet d'agir immédiatement sur la consigne du corps HP et donc directement sur la vitesse HP, permet des excursions de vitesses de corps BP bien plus faibles. Ces variations obtenues restent ainsi alors dans les limites autorisées par les constructeurs des équipements et de la plage de la turbine TL, les excursions passant par exemple de 30 à 10%. Aucun délestage n'est nécessaire et la sécurité de fourniture de puissance est assurée.

La présente invention se rapporte également à une commande de régulation configurée pour mettre en oeuvre le procédé ci-dessus. Cette commande combine un régulateur de vitesse de corps BP, un régulateur de vitesse de corps HP et un régulateur de débit de carburant. Le régulateur de vitesse de corps BP comporte un outil comparateur d'élaboration d'une consigne de vitesse du corps BP à partir des mesures transmises par des moyens de mesure des puissances fournies, et des vitesses de rotation minimales correspondant aux puissances demandées par chaque équipement entraîné par le groupe de puissance, à partir de données de variation de puissance en fonction de la vitesse pour chaque équipement.

Un soustracteur mesure l'écart entre la consigne ainsi élaborée et la vitesse du corps BP. Cet écart est transmis à un premier convertisseur qui le convertit en écart de vitesse de corps HP pour être transmis au régulateur de vitesse de corps HP. Ce régulateur HP comporte des moyens d'élaboration d'une consigne de vitesse de corps HP à partir du premier convertisseur. La consigne de vitesse HP passe par un filtre limiteur qui recadre les valeurs de consigne dans des plages autorisées.

La consigne recadrée est alors transmise au régulateur de débit sous forme de consigne de débit via un deuxième convertisseur. Dans le régulateur de débit, la consigne passe dans un filtre limiteur, qui recadre les valeurs de consigne dans des plages autorisées, avant d'être transmise sous forme de commande à un doseur de carburant.

Selon des modes de réalisation particuliers :

- un soustracteur de valeurs de vitesse de corps HP à deux instants successifs fournit, en tenant compte de la constance de la puissance mesurée dans un outil de correction de vitesse de corps BP, des incréments de correction à l'outil d'élaboration de consigne de vitesse BP ;

- un filtre de limitation du bruit est également couplé à l'outil de correction de vitesse du corps BP ;

- un comparateur d'anticipation est apte à corriger la consigne de vitesse du corps HP du groupe de puissance en fonction de la variation entre la puissance fournie et la puissance mesurée avant qu'elle soit soumise au filtre limiteur de vitesses ;

- un moyen de mesure de puissance fournie en continu à chaque équipement, la mesure pouvant être directe - en particulier un wattmètre ou un ensemble couple-mètre/tachymètre - ou indirecte par calcul à partir de données - en particulier par le produit courant- tension provenant d'instruments appropriés;

- les variations de puissance demandée sont quantifiées dans une unité de traitement numérique à l'entrée du régulateur de vitesse HP à partir des ordres transmis par le pilotage et l'unité de commande des systèmes de vol de l'aéronef ainsi que d'autres paramètres déjà acquis, en particulier des conditions ambiantes de température et de pression ou de l'état des entrées/sorties du générateur de puissance.

BRÈVE DESCRIPTION DES FIGURES

D'autres aspects, caractéristiques et avantages de l'invention apparaîtront dans la description non limitative qui suit, relative à des modes de réalisation particuliers, en référence aux dessins annexés qui représentent, respectivement :

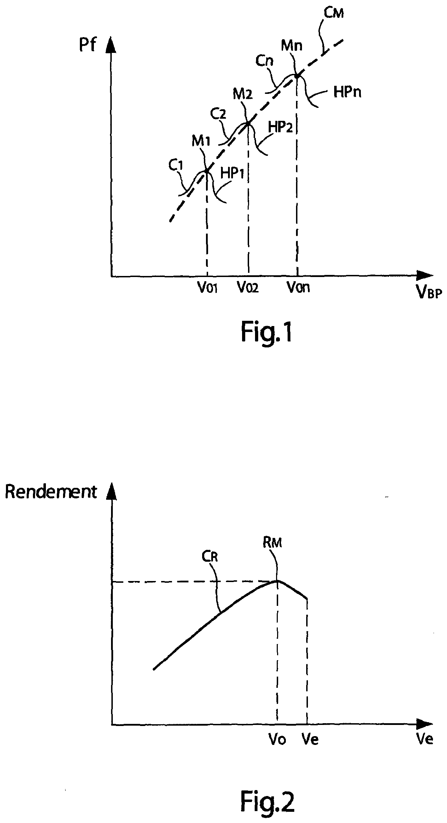

- en figure 1, un diagramme des courbes de variation de la puissance mécanique fournie par le corps BP sur son arbre en fonction de sa vitesse de rotation pour différentes conditions ambiantes ;

- en figure 2, une courbe de rendement d'un équipement en fonction de sa vitesse d'entraînement pour définir la puissance demandée par cet équipement ; et

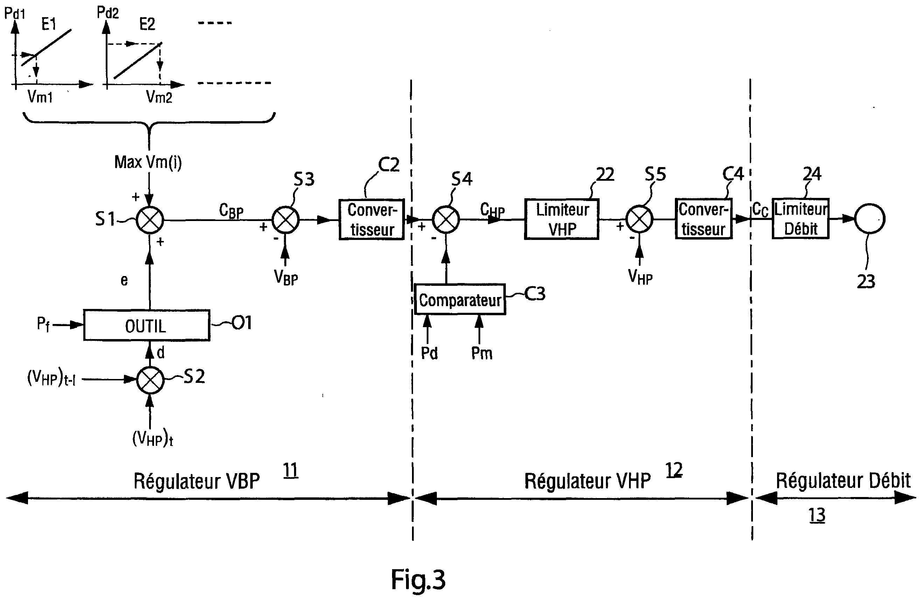

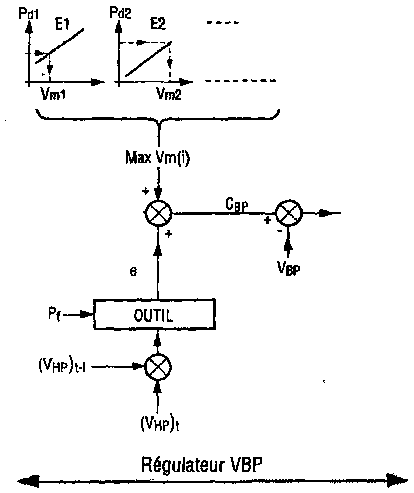

- en figure 3, un bloc diagramme d'un exemple de commande de régulation selon l'invention.

## DESCRIPTION DETAILLEE

En référence à la figure 1, des courbes C1 à Cn de puissance mécanique fournie Pf par le corps BP d'un groupe de puissance à turbine TL sont présentées. La puissance Pf est représentée en fonction de la vitesse de rotation $V_{BP}$ du corps BP, pour une condition ambiante définie - en température et pression à l'entrée du corps BP et pour différents niveaux de puissance thermique du corps HP, HP1 à HPn. Chaque courbe C1 à Cn présente un profil en « chapeau de gendarme ». Les maximas de puissance, M1 à Mn, correspondent alors à des vitesses optimales $V_{O1}$, ..., $V_{on}$, qui se placent sur une courbe optimale $C_M$. Cette courbe optimale $C_M$ est mémorisée pour pouvoir être utilisée dans la commande de régulation pour déterminer l'amplitude de l'incrément par le calcul.

Par ailleurs, la figure 2 illustre la courbe de rendement $C_R$ pour un niveau de puissance donné fourni à un équipement donné, ici un compresseur de charge, en fonction de la vitesse d'entraînement Ve de cet équipement. Le rendement maximal $R_M$ est obtenu pour une vitesse optimale $V_O$ proche de sa vitesse limite autorisée $V_I$. Les vitesses $V_o$ sont également mémorisées pour tous les équipements pour être utilisées dans la commande de régulation ci-dessous.

En référence à la figure 3, un exemple de commande de régulation 1 comporte trois régulateurs 11, 12 et 13. cette commande de régulation équipe un groupe de puissance à turbine libre TL d'un aéronef en liaison avec le système de pilotage et l'unité de contrôle de l'aéronef pour recevoir des données et des instructions de régulation. Les régulateurs de la commande 1 se répartissent comme suit :

- un régulateur de vitesse de rotation 11 de l'arbre d'entraînement du corps BP de la turbine TL du groupe de puissance,

- un régulateur de vitesse 12 du corps HP de la turbine TL du groupe de puissance, et

- un régulateur de débit de carburant 13 du groupe de puissance.

Pour chaque équipement E1, E2,..., une courbe Cm1, Cm2,..., des vitesses V1, V2, ..., correspondant aux puissances demandées Pd1, Pd2,... - pour chaque condition ambiante de température et de pression à l'entrée du corps BP - sont définies par le constructeur. Chaque courbe Cm1, Cm2, ..., permet à chaque instant de connaitre la vitesse minimale Vm1, Vm2, ..., à partir de laquelle l'équipement est apte à fournir une puissance partielle demandée.

Pour faciliter l'exploitation des données, les valeurs numériques de rotations des équipements sont converties en valeurs de rotation de l'arbre BP en tenant compte des facteurs de réduction et/ou de multiplication des trains d'engrenage, centralisés par exemple par une boîte de transfert de puissance.

Pour l'ensemble Ei des équipements présents dans l'exemple, une valeur maximale Max(Vmi) des vitesses minimales Vmi est déterminée dans les conditions ambiantes. Cette valeur Max(Vmi) est la vitesse maximale autorisée pour chaque équipement de l'ensemble Ei. Avec cette valeur Vmi, tous les équipements entrainés sont aptes à fournir la puissance qui leur est demandée. La valeur Max(Vmi) obtenue peut être avantageusement comparée aux limitations autorisées, en particulier pour la plage de 50% à 100%.

La valeur Max(Vmi) ainsi déterminée est transmise à un sommateur S1 du régulateur de vitesse du corps BP 11. Ce sommateur S1 intègre également à chaque élaboration de consigne de vitesse du corps BP, un incrément de vitesse BP positif « e », ici égal à 1 %, pour donner une valeur de consigne $C_{BP}$ de vitesse de corps BP telle que :

$$C_{BP} = Max(Vmi) + e$$

L'incrément de vitesse BP « e » n'est introduit que de manière conditionnelle, jusqu'à ce que la vitesse $V_{HP}$ du corps HP soit minimisée. La variation de la vitesse du corps HP est suivie dans le soustracteur S2 en fournissant une information différentielle « d ». Si à un instant t la valeur de vitesse mesurée de rotation du corps HP $(V_{HP})$t est inférieure à celle à l'instant antérieur t-1, $(V_{HP})$t-1, alors la différence « d » entre ces valeurs est négative. Si, de plus, la puissance mesurée Pm sur le corps BP est restée constante dans cet intervalle de temps (t - t-1), alors un outil correcteur O1 - auquel s'applique Pm - transmet une valeur de « e » égale à 1% au sommateur S1. Dans le cas contraire, la valeur de l'incrément est égale à 0. Une telle correction permet de s'affranchir des oscillations des mesures et permet de calculer la valeur de l'incrément « e ».

L'incrémentation peut également être déclenchée par le calcul. A puissance délivrée donnée pour chaque équipement, différentes formes peuvent être utilisées, modélisation, mise en équation avec recherche du point mini, itération etc.....Le but recherché est de trouver la vitesse du corps BP qui minimise la vitesse du corps HP à puissance délivrée constante par chacun des équipements. Par exemple pour un équipement i qui fournit une puissance Pmi à chaque vitesse d'entrainement $V_{BP}$ correspond une puissance d'entrainement de l'équipement i Pmi. La somme de Pmi donne la puissance à fournir par le corps BP à cette vitesse $V_{BP}$. La courbe en chapeau de gendarme donne la valeur de $V_{HP}$ correspondante. Le calcul détermine alors la valeur minimale de $V_{HP}$.

Une information relative au bruit B1 est avantageusement introduite dans l'outil correcteur O1. Tant que le niveau de bruit dans un équipement est supérieur à une valeur plafond, par exemple 100 dB, l'information de bruit déclenche également un incrément « e » et la minimisation du bruit à un niveau inférieur à ce seuil est régulée de façon similaire à celle de la vitesse $V_{HP}$.

La valeur de consigne $C_{BP}$ de la vitesse du corps BP est fournie par le sommateur S1 et transmis à un soustracteur S3 qui compare la valeur mesurée $Vm_{BP}$ de la vitesse du corps BP à la valeur $C_{BP}$. Un convertisseur C2 convertit la variation de vitesse du corps BP en variation équivalente de vitesse $V_{HP}$ du corps HP.

Cette variation de vitesse $V_{HP}$ est transmise à un soustracteur d'anticipation S4 du régulateur 12 de vitesse du corps HP. Le soustracteur S4 compare cette variation de vitesse $V_{HP}$ avec la valeur issue d'un comparateur C3 de traitement d'une « loi » d'anticipation, pour obtenir la valeur de consigne de vitesse $C_{HP}$ du corps HP.

Cette loi d'anticipation consiste à corriger la vitesse $V_{HP}$ du corps HP en fonction de la variation de puissance demandée Pd aux équipements et également de la variation de la puissance mesurée sur l'arbre d'entraînement Pm.

La loi d'anticipation permet donc, à partir des variations des puissances à fournir et mesurée, de déterminer les variations de besoin de puissance et de déterminer la variation de vitesse $V_{HP}$ à appliquer pour assurer une nouvelle demande de puissance.

La consigne de vitesse $C_{HP}$ du corps HP est ensuite comparée aux valeurs de limitations dans un filtre limiteur 22 qui recadre les valeurs de consigne dans des plages autorisées.

En sortie du filtre 22, la consigne de vitesse $C_{HP}$ est comparée à la mesure de la vitesse $Vm_{HP}$ dans un soustracteur S5. L'écart obtenu est intégré à un convertisseur C4, qui transforme l'écart de vitesse en écart de débit de carburant pour fournir, en sortie, une consigne de débit carburant $C_C$.

Cette consigne de débit carburant $C_C$ est transmise au régulateur de débit 13 sous forme de commande à un doseur de carburant 23 via un limiteur de débit 24. La variation de débit carburant injecté dans la chambre de combustion du groupe de puissance modifie alors la vitesse $V_{HP}$ du corps HP, et donc le niveau d'énergie fourni. Pour une demande constante de puissance, cette variation $V_{HP}$ de vitesse du corps HP modifie la vitesse

$V_{BP}$ du corps BP : une nouvelle boucle de régulation naît pour contrôler les vitesses.

## Revendications

**1.** Procédé d'optimisation de régulation d'un groupe de puissance à turbine libre TL d'un aéronef équipé d'un corps basse pression BP qui délivre de la puissance à des équipements (E1, E2, ...) en liaison avec un corps haute pression HP, **caractérisé en ce qu'**il consiste à varier la vitesse du corps BP ($V_{BP}$) en fonction de la valeur maximale (Max(Vmi)) des vitesses minimales (Vm1, Vm2) des équipements et d'une incrémentation (e) positive ou nulle pour minimiser la vitesse du corps HP ($V_{HP}$) pour obtenir une vitesse du corps HP ($V_{HP}$) minimale de sorte que la puissance fournie (Pf) par les équipements reste constante.

**2.** Procédé d'optimisation selon la revendication 1, dans lequel les puissances fournies (Pf) par les équipements étant fonction de leur vitesse d'entraînement par le corps BP, la consigne de vitesse du corps BP ($C_{BP}$) de la turbine TL est fonction de la valeur maximale (Max(Vmi)) des vitesses minimales (Vm1, Vm2) des équipements permettant d'obtenir de manière optimisée les puissances respectivement demandées et d'une incrémentation (e) positive ou nulle ajoutée à la consigne de vitesse du corps BP ($C_{BP}$) pour minimiser la vitesse du corps HP ($V_{HP}$) à iso-fourniture de puissance des équipements.

**3.** Procédé d'optimisation selon l'une des revendications 1 et 2, dans lequel une mesure de puissance fournie (Pf) en continu par chacun des équipements permet de détecter un fonctionnement stabilisé des demandes de fourniture de puissance et dans ce cas d'activer l'incrémentation.

**4.** Procédé d'optimisation selon l'une quelconque des revendications 1 à 3, dans lequel l'incrémentation est déterminée par calcul à partir des courbes de rendement ($C_R$) des équipements et de la turbine libre.

**5.** Procédé d'optimisation selon la revendication précédente, dans lequel, pour chaque équipement, un niveau de puissance thermique du corps HP transmise au corps BP et pour chaque condition ambiante de température et de pression à l'entrée du groupe de puissance, il existe une vitesse de rotation du corps BP qui permet de délivrer sur son arbre une puissance mécanique maximale.

**6.** Procédé d'optimisation selon l'une quelconque des revendications 1 à 3, dans lequel l'incrémentation est déterminée par la détection de la variation de la vitesse du corps HP, l'incrémentation étant alors appliquée jusqu'à ce que la vitesse du corps HP soit minimale.

7. Procédé d'optimisation selon l'une quelconque des revendications précédentes, dans lequel la consigne de vitesse de rotation du corps BP($C_{BP}$) est régulée pour prioritairement à chaque instant adapter la vitesse de rotation du corps BP ($V_{BP}$) à la fourniture de la puissance demandée (Pd) par chacun des équipements, et/ou adapter la vitesse de rotation du corps BP ($V_{BP}$) au rendement global maximal par minimisation de la puissance à fournir par la turbine BP selon la puissance demandée, et/ou adapter la vitesse de rotation du corps BP ($V_{BP}$) à des conditions particulières d'utilisation, en particulier pour minimiser le niveau sonore (B1).

8. Procédé d'optimisation selon l'une quelconque des revendications précédentes, dans lequel le procédé prévoit une étape supplémentaire d'anticipation dans laquelle une consigne de vitesse ($V_{HP}$) du corps HP du groupe de puissance est régulée en fonction de la variation de puissance demandée (Pd) aux équipements et également de la variation de la puissance mesurée (Pm) sur l'arbre d'entraînement

9. Commande de régulation configurée pour mettre en oeuvre le procédé selon l'une quelconque des revendications précédentes, **caractérisée en ce qu'**elle combine un régulateur de vitesse de corps BP (11), un régulateur de vitesse de corps HP (12) et un régulateur de débit de carburant (13), **en ce que** le régulateur de vitesse de corps BP comporte un outil comparateur (O1) d'élaboration d'une consigne de vitesse du corps BP ($C_{BP}$) à partir des mesures transmises par des moyens de mesure des puissance fournies (Pf), et des vitesses de rotation minimales (Vmi) correspondant aux puissances demandées (Pd) par chaque équipement entraîné par le groupe de puissance, à partir de données de variation de puissance en fonction de la vitesse pour chaque équipement, **en ce qu'**un soustracteur mesure l'écart entre la consigne ($C_{BP}$) ainsi élaborée et la vitesse du corps BP ($V_{BP}$), **en ce que** cet écart est transmis à un premier convertisseur (C2) qui le convertit en écart de vitesse de corps HP pour être transmis au régulateur de vitesse de corps HP (12), **en ce que** ce régulateur HP comporte des moyens d'élaboration (S4, C3) d'une consigne de vitesse de corps HP ($C_{HP}$) à partir du premier convertisseur (C2), et **en ce que** la consigne de vitesse HP ($C_{HP}$) passe par un filtre limiteur (22) qui recadre les valeurs de consigne dans des plages autorisées, la consigne recadrée étant alors transmise au régulateur de débit (13) sous forme de consigne de débit ($C_C$) via un deuxième convertisseur (C4).

10. Commande de régulation selon la revendication précédente, dans laquelle la consigne du régulateur de débit ($C_C$) passe dans un filtre limiteur (24), qui recadre les valeurs de consigne dans des plages autorisées, avant d'être transmise à un doseur de carburant (23).

11. Commande de régulation selon l'une des revendications 9 et 10, dans laquelle un soustracteur de valeurs de vitesse de corps HP à deux instants successifs fournit, en tenant compte de la constance de la puissance mesurée dans l'outil de correction de vitesse de corps BP (O1), des incréments (e) de correction à l'outil d'élaboration de consigne de vitesse BP (O1).

12. Commande de régulation selon l'une quelconque des revendications 9 à 11, dans laquelle un filtre de limitation du bruit (B1) est couplé à l'outil de correction de vitesse du corps BP (O1).

13. Commande de régulation selon l'une quelconque des revendications 9 à 12, dans laquelle un comparateur d'anticipation est apte à corriger la consigne de vitesse du corps HP ($C_{HP}$) en fonction des variations de puissance fournie (Pf) et de puissance mesurée sur l'arbre d'entraînement (Pm), avant d'être soumis au filtre limiteur de vitesses.

14. Commande de régulation selon l'une quelconque des revendications 9 à 13, dans laquelle les variations de puissances demandées sont quantifiées dans une unité de traitement numérique à l'entrée du régulateur de vitesse HP à partir des ordres transmis par le pilotage et l'unité de contrôle des systèmes de vol de l'aéronef ainsi que d'autres paramètres déjà acquis.

15. Aéronef comportant un groupe de puissance, une commande de régulation des vitesses de corps BP et HP ainsi que du débit de carburant, **caractérisé en ce que** la commande de régulation est conforme à l'une quelconque des revendications 9 à 14 pour mettre en oeuvre le procédé d'optimisation selon l'une quelconque des revendications 1 à 8.

**Patentansprüche**

1. Verfahren zur Optimierung der Regulierung einer Leistungseinheit TL mit einer freien Turbine eines Flugzeugs, der mit einem Niederdruckkörper BP ausgestattet ist, der Leistung an Geräte (E1, E2, ...) in Verbindung mit einem Hochdruckkörper HP liefert, **dadurch gekennzeichnet, dass** es darin besteht, die Geschwindigkeit des Körpers BP ($V_{BP}$) als Funktion von dem maximalen Wert (Max (Vmi)) von den minimalen Geschwindigkeiten (Vm1, Vm2) der Geräte und einer positiven Inkrementation oder ohne Inkrementation (e) zu variieren, um die Geschwindigkeit des Körpers HP ($V_{HP}$) zu minimieren, um eine minimale Geschwindigkeit des Körpers HP ($V_{HP}$) zu erhalten, so dass die Leistung (Pf), die von den Geräten geliefert wird, konstant bleibt.

2. Verfahren zur Optimierung nach Anspruch 1, wobei die Leistungen (Pf), die von den Geräten geliefert werden, eine Funktion von ihrer Antriebsgeschwindigkeit durch den Körper BP ist, wobei der Sollwert der Geschwindigkeit des Körper BP ($C_{BP}$) der Turbine TL eine Funktion des maximalen Werts (Max (Vmi)) der minimalen Geschwindigkeiten (Vm1, Vm2) der Geräte, was es ermöglicht, auf optimierte Weise, die jeweiligen angeforderten Leistungen zu erhalten, und einer positiven Inkrementation oder ohne Inkrementation (e) ist, die zu dem Sollwert der Geschwindigkeit des Körpers BP ($C_{BP}$) hinzugefügt wird, um die Geschwindigkeit des Körpers HP ($V_{HP}$) bei einer konstanten Zufuhr der Leistung der Geräte zu minimieren.

3. Verfahren zur Optimierung nach einem der Ansprüche 1 und 2, wobei eine Messung der Leistung (Pf), die kontinuierlich durch jedes der Geräte geliefert wird, es ermöglicht, einen stabilisierten Betrieb der Anforderungen der Lieferung von Leistung zu erfassen und in diesem Fall die Inkrementation zu aktivieren.

4. Verfahren zur Optimierung nach einem der Ansprüche 1 bis 3, wobei die Inkrementation durch Berechnung ausgehend von den Wirkungsgradkurven ($C_R$) der Geräte und der freien Turbine bestimmt wird.

5. Verfahren zur Optimierung nach dem vorhergehenden Anspruch, wobei für jedes Gerät ein thermisches Leistungsniveau des Körpers HP, das von dem Körper BP übertragen wurde, und für jede Umgebungsbedingung der Temperatur und des Drucks am Eingang der Leistungseinheit es eine Drehgeschwindigkeit des Köpers BP gibt, die es ermöglicht, an ihre mechanische Welle eine maximale Leistung zu liefern.

6. Verfahren zur Optimierung nach einem der Ansprüche 1 bis 3, wobei die Inkrementation durch das Erfassen der Variation der Geschwindigkeit des Körpers HP bestimmt wird, wobei die Inkrementation dann angewendet wird, bis die Geschwindigkeit des Körpers HP minimal ist.

7. Verfahren zur Optimierung nach einem der vorhergehenden Ansprüche, wobei der Sollwert der Drehgeschwindigkeit des Körpers BP ($C_{BP}$) geregelt wird, um vor jedem Zeitpunkt die Drehgeschwindigkeit des Körpers BP ($V_{BP}$) an die Lieferung der angeforderten Leistung (Pd) durch jedes der Geräte anzupassen, und / oder die Drehgeschwindigkeit des Körpers BP ($V_{BP}$) an den maximalen Gesamtwirkungsgrad durch eine Minimierung der Leistung anzupassen, die von der Turbine BP gemäß der angeforderten Leistung geliefert wird, und / oder die Drehgeschwindigkeit des Körpers BP ($V_{BP}$) an besondere Einsatzbedingungen anzupassen, insbesondere um das Geräuschniveau (B1) zu minimieren.

8. Verfahren zur Optimierung nach einem der vorhergehenden Ansprüche, wobei das Verfahren einen zusätzlichen Schritt der Antizipation vorsieht, in dem ein Sollwert der Geschwindigkeit ($V_{HP}$) des Körpers HP der Leistungseinheit als Funktion der Variation der an die Geräte angeforderten Leistung (Pd) und auch der Variation der gemessenen Leistung (Pm) auf der Antriebswelle geregelt wird.

9. Regelsteuerung, die konfiguriert ist, um das Verfahren nach einem der vorhergehenden Ansprüche umzusetzen, **dadurch gekennzeichnet, dass** sie einen Regler der Geschwindigkeit des Körpers BP (11), einen Regler der Geschwindigkeit des Körpers HP (12) und einen Regler des Kraftstoffverbrauchs (13) kombiniert, dass der Regler der Geschwindigkeit des Körpers BP ein Komparatorwerkzeug (O1) zur Erstellung eines Sollwertes der Geschwindigkeit des Körpers BP ($C_{BP}$) ausgehend von den Messungen, die durch die Mittel zum Messen der gelieferten Leistung (Pf) übertragen wurden, und der minimalen Drehgeschwindigkeiten (Vmi), die den Leistungen (Pd) entsprechen, die von jedem Gerät angefordert werden, das durch die Antriebseinheit angetrieben wird, ausgehend von den Daten der Variation der Leistung als Funktion der Geschwindigkeit für jedes Gerät umfasst, dass ein Subtrahierer die Differenz zwischen dem so erstellten Sollwert ($C_{BP}$) und der Geschwindigkeit des Körpers BP ($V_{BP}$) misst, dass die Differenz an einen ersten Wandler (C2) gesendet wird, der ihn in eine Differenz der Geschwindigkeit des Körpers HP umwandelt, um an den Regler der Geschwindigkeit des Körpers HP (12) übertragen zu werden, dass der Regler Mittel zur Erstellung (S4, C3) eines Sollwerts der Geschwindigkeit des Körpers HP ($C_{BP}$) ausgehend von dem ersten Wandler (C2) umfasst, und dass der Sollwert der Geschwindigkeit HP ($C_{HP}$) durch einen Filter zur Begrenzung (22) läuft, der die Sollwerte in den erlaubten Bereichen einschränkt, wobei der eingeschränkte Sollwert dann an einen Durchflussregler (13) in Form eines Sollwerts des Durchflusses ($C_C$) über einen zweiten Wandler (C4) übertragen wird.

10. Regelsteuerung nach dem vorangehenden Anspruch, wobei der Sollwert des Durchflussreglers ($C_C$) durch einen Filter zur Begrenzung (24) läuft, der die Sollwerte innerhalb des erlaubten Bereichs einschränkt, bevor er zu einem Treibstoffdosierer (23) übertragen wird.

**11.** Regelsteuerung nach einem der Ansprüche 9 und 10, wobei ein Subtrahierer der Werte der Geschwindigkeit des Körpers HP zu zwei aufeinander folgenden Zeitpunkten unter Berücksichtigung der Konstanz der Leistung, die in dem Werkzeug zur Korrektur der Geschwindigkeit des Körpers BP (O1) gemessen wird, Inkremente (e) zur Korrektur an das Werkzeug zur Erstellung des Sollwerts der Geschwindigkeit BP (O1) liefert.

**12.** Regelsteuerung nach einem der Ansprüche 9 bis 11, wobei ein Filter zur Begrenzung des Rauschens (B1) mit dem Werkzeug zur Korrektur der Geschwindigkeit des Körpers BP (O1) gekoppelt ist.

**13.** Regelsteuerung nach einem der Ansprüche 9 bis 12, wobei ein Komparator zur Antizipation eingerichtet ist, den Sollwert der Geschwindigkeit des Körpers HP ($C_{HP}$) als Funktion der Änderungen der gelieferten Leistung (Pf) und der gemessenen Leistung zu berichtigen, die an der Antriebswelle (Pm) gemessen wird, bevor er dem Filter zur Begrenzung unterzogen werden.

**14.** Regelsteuerung nach einem der Ansprüche 9 bis 13, wobei die angeforderten Variationen der Leistung in einer Einheit zur numerischen Verarbeitung an dem Eingang des Reglers der Geschwindigkeit HP ausgehend von Befehlen, die von der Lenkung und der Einheit zur Steuerung der Systeme des Flugs des Flugzeugs übertragen wurden, sowie von anderen bereits erfassten Parametern quantifiziert wurden.

**15.** Flugzeug, das eine Leistungseinheit , eine Steuerung zur Regelung der Geschwindigkeiten der Körper BP und HP sowie des Treibstoffverbrauchs umfasst, **dadurch gekennzeichnet, dass** die Regelsteuerung in Übereinstimmung mit einem der Ansprüche 9 bis 14 ist, um das Verfahren zur Optimierung nach einem der Ansprüche 1 bis 8 einzusetzen.

**Claims**

**1.** Method for optimizing the regulation of a TL free-turbine power unit of an aircraft provided with a low-pressure LP body which supplies power to equipments (E1, E2, ...) and which is linked to a high-pressure HP body, **characterized in that** it consists in varying the LP body speed ($V_{BP}$) in accordance with the maximal value (Max(Vmi)) of the minimal speeds (Vm1, Vm2) of the equipments and with a positive or zero incrementation (e) in order to obtain a minimal HP body speed ($V_{HP}$) so that the power (Pf) supplied by the equipments remains constant.

**2.** Optimization method according to claim 1, in which, since the power (Pf) supplied by the equipments is dependent upon the speed at which the said equipments are driven by the LP body, the speed set-point ($C_{BP}$) of the LP body of the TL turbine is dependent upon the maximal value (Max(Vmi)) of the equipment minimal speeds (Vm1, Vm2) enabling the respectively required amounts of power to be obtained in an optimized manner and upon a positive or zero incrementation (e) added to the speed set-point ($C_{BP}$) of the LP body in order to minimize the HP body speed ($V_{HP}$) at equal power supplied by the equipments.

**3.** Optimization method according to one of claims 1 and 2, in which a power measurement (Pf) supplied continuously by each of the equipments makes it possible to detect a stabilized operation of the requests for power supply and, in that case, to activate the incrementation.

**4.** Optimization method according to any of claims 1 to 3, in which the incrementation is determined by calculation from the efficiency curves ($C_R$) of the equipments and free turbine.

**5.** Optimization method according to the preceding claim, in which, for each equipment, for a level of thermal power of the HP body transmitted to the LP body and for each ambient condition of temperature and pressure at the inlet of the power unit, there is a rotational speed of the LP body which makes it possible to supply a maximal mechanical power to its shaft.

**6.** Optimization method according to any of claims 1 to 3, in which the incrementation is determined by detecting the variation in the HP body speed, the incrementation being then applied until the HP body speed is minimal.

**7.** Optimization method according to any of the preceding claims, in which the rotational speed set-point of the LP body ($C_{BP}$) is regulated firstly and all the time in order to adjust the LP body rotational speed ($V_{BP}$) to the supply of the power required (Pd) by each of the equipments, and/or adjust the LP body rotational speed ($V_{BP}$) to the maximal overall efficiency by minimization of the power to be supplied by the LP turbine according to the required power, and/or adjust the LP body rotational speed ($V_{BP}$) to specific conditions of use, in particular to minimize the sound level (B1).

**8.** Optimization method according to any of the preceding claims, in which the method provides an additional step of anticipation in which a speed set-point ($V_{HP}$) of the HP body of the power unit is regulated according to the variation in the power required (Pd) from the equipments and also to the variation in the power measured (Pm) on the drive shaft

9. Regulation control unit capable of implementing the method according to any of the preceding claims, **characterized in that** it combines a LP body speed governor (11), a HP body speed governor (12) and a fuel-flow regulator (13), **in that** the LP body speed governor includes a comparison tool (O1) for elaborating a LP body speed set-point ($C_{BP}$) from the measurements transmitted by means for measuring the amounts of power supplied (Pf) and minimal rotational speeds (Vmi) corresponding to the amounts of power (Pd) required by each equipment driven by the power unit from power variation data according to the speed for each equipment, **in that** a subtracter measures the difference between the so elaborated set-point ($C_{BP}$) and the LP body speed ($V_{BP}$), **in that** this difference is transmitted to a first converter (C2) which converts it into a HP body speed difference to be transmitted to the HP body speed governor (12), **in that** this HP regulator includes means (S4, C3) for elaborating a HP body speed set-point ($C_{HP}$) from the first converter (C2), and **in that** the HP speed set-point ($C_{HP}$) goes through a limiting filter (22) which redefines the set-point values within permissible ranges, the redefined set-point being then transmitted to the flow regulator (13) in the form of a flow-rate set-point ($C_C$) via a second converter (C4).

10. Regulation control unit according to the preceding claim, in which the flow regulator set-point ($C_C$) goes through a limiting filter (24), which redefines the set-point values within permissible ranges, before being transmitted to a fuel-metering valve (23).

11. Regulation control unit according to one of claims 9 and 10, in which a subtracter of HP body speed values at two successive moments supplies correcting increments (e) to the tool for elaborating the LP speed set-point (O1), while taking the constancy of the power measured in the tool for correcting the LP body speed (O1) into account,.

12. Regulation control unit according to any of claims 9 to 11, in which a noise limiting filter (B1) is coupled with the LP body speed correcting tool (O1).

13. Regulation control unit according to any of claims 9 to 12, in which an anticipation comparator is capable of correcting the HP body speed set-point ($C_{HP}$) according to the variations of the power supplied (Pf) and the power measured on the drive shaft (Pm), before it is submitted to the speed-limiting filter.

14. Regulation control unit according to any of claims 9 to 13, in which the variations in the required power are quantified in a digital-processing unit at the input of the HP speed governor from the orders transmitted by the piloting and the control unit of the aircraft flight systems as well as from other already acquired parameters.

15. Aircraft including a power unit, a control unit for regulating the HP and LP body speeds as well as the fuel-flow rate, **characterized in that** the regulation control unit is in accordance with any of claims 9 to 14 for implementing the optimization method according to any of claims 1 to 8.

Fig.1

Fig.2

Fig.3

EP 2 609 313 B1

Régulateur VBP

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2178151 A1

- US 2003126864 A1